Europäisches Patentamt

European Patent Office

Office européen des brevets

(19)

(11) Veröffentlichungsnummer : **0 099 048**
**B1**

(12) **EUROPÄISCHE PATENTSCHRIFT**

(45) Veröffentlichungstag der Patentschrift :
07.05.86

(51) Int. Cl.⁴ : **H 02 G 11/02**

(21) Anmeldenummer : **83106542.0**

(22) Anmeldetag : **05.07.83**

(54) **Kabeltrommel.**

(30) Priorität : **10.07.82 DEU 8219791**

(43) Veröffentlichungstag der Anmeldung :
**25.01.84 Patentblatt 84/04**

(45) Bekanntmachung des Hinweises auf die Patenterteilung : **07.05.86 Patentblatt 86/19**

(84) Benannte Vertragsstaaten :
**DE FR GB IT NL SE**

(56) Entgegenhaltungen :
**DE-A- 3 113 444**
**DE-B- 1 765 804**
**DE-U- 7 605 177**
**DE-U- 8 219 791**
**FR-A- 1 232 387**

(73) Patentinhaber : **ATLANTA-KABEL-Steinmüller KG**
**Westerfelder Weg 25-27**
**D-5880 Ludenscheid (DE)**

(72) Erfinder : **Steinmüller, Kurt**
**Westerfelder Weg 25-27**
**D-5880 Lüdenscheid (DE)**

(74) Vertreter : **Hassler, Werner, Dr.**
**Postfach 17 04 Asenberg 62**
**D-5880 Lüdenscheid (DE)**

EP 0 099 048 B1

Jouve, 18, rue St-Denis, 75001 Paris, France

**Beschreibung**

Die Erfindung betrifft eine Kabeltrommel mit einer Lagerbuchse, deren Befestigungsende an einer Gehäusewand gehalten ist und die Innenschleifringe sowie zwei Lagerflächen aufweist, mit einer Außennabe, die auf den Lagerflächen der Lagerbuchse drehbar gelagert ist und mit den Innenschleifringen zusammenwirkende Kontaktfedern aufnimmt, und mit einem Trommelkörper, der form- und kraftschlüssig auf der Außennabe sitzt.

Die kontakttragenden Teile der Kabeltrommel müssen aus einem hierfür zugelassenen hochwertigen, kriechstromfesten und wärmebeständigen Kunststoff bestehen. Um die Menge des benötigten hochwertigen Kunststoffmaterials möglichst klein zu halten, hat man bereits vorgesehen, die Lagerbuchse und die Außennabe als gesonderte Teile auszubilden. Eine derartige Anordnung ist aus dem DE-U-76 05 177 bekannt. Bei der bekannten Anordnung ist die Lagerbuchse an der Gehäusewand durch Schraubverbindungen befestigt. Die Außennabe ist auf die Lagerbuchse aufgesteckt, damit die Gegenkontakte in richtiger Ausrichtung auf die Schleifringe montiert werden können. Der Trommelkörper ist auf die Außennabe aufsteckbar. Zum Zusammenhalt der Anordnung in axialer Richtung ist eine Abdeckscheibe vorgesehen, die an der Lagerbuchse festgeschraubt ist. Man benötigt also zwei Befestigungsvorrichtungen, um die gesamte Kabeltrommel in axialer Richtung zusammenzuhalten. Außerdem ist die Montage recht umständlich, insbesondere auch weil für die Kontaktelemente besondere Hilfsmittel erforderlich sind.

Aufgabe der Erfindung ist eine solche Ausbildung der Kabeltrommel, daß die Einzelteile in einer axialen Richtung allein formschlüssig ineinander festgehalten werden, so daß nur eine Befestigung der Lagerbuchse als Ganzes an der Gehäusewand zum Zusammenhalt der Anordnung erforderlich ist.

Diese Aufgabe wird nach der Erfindung durch folgende Merkmale gelöst :

a) mindestens eine Lagerfläche weist einen beim Einstecken der Lagerbuchse in die Außennabe wirksamen Ringbund auf, dessen Ringfläche gegen das Befestigungsende gerichtet ist ;

b) die Außennabe weist axiale Stege auf, die sich in Schlitze des Trommelkörpers einlegen ;

c) mindestens ein Steg besitzt Fenster jeweils zur Aufnahme je einer W-förmigen Kontaktfeder, die sich in dem Fenster abstützt und mit einem vorgespannten Schenkel an einem Innenschleifring anliegt ;

d) ein Trommelflansch liegt an einem dem Befestigungsende der Lagerbuchse zugewandten Ringbund der Außennabe an ;

e) die Stege haben mindestens eine Ausnehmung für die Zugentlastung eines Leiterkabels.

Die Teile der Kabeltrommel, Lagerbuchse, Außennabe und Trommelkörper lassen sich jeweils in einer axialen Richtung ineinander stecken und kommen mit entsprechenden Flanschflächen bzw. Bundflächen aneinander in Anlage, so daß in dieser axialen Richtung eine formschlüssige Sicherung gegeben ist. Nachdem die Lagerbuchse an der Gehäusewand befestigt ist, ist ein Auseinanderziehen der teile nicht mehr möglich, so daß die gesamte Kabeltrommel durch eine Verbindung zwischen Lagerbuchse und Gehäusewand zusammengehalten wird.

Ferner sieht die Erfindung vor, daß die W-förmige Kontaktfeder jeweils mit ihrem Mittelbügel am Außenrand des Fensters des Steges anliegt und daß die gegeneinander vorgespannten Schenkel in Spalte der Umfangswand der Außennabe hineinreichen. Die Anordnung der Innenschleifringe und der Gegenkontakte ist so getroffen, daß dieselben nach dem Aufstecken der außennabe in radialer Richtung eingeführt werden und danach nicht mehr in axialer Richtung verschiebbar sind, so daß eine sichere Kontaktgabe gewährleistet ist. Die Außennabe dient auch gleichzeitig der Zugentlstung des Leiterkabels, so daß keine besonderen Maßnahmen erforderlich sind, um eine Beeinträchtigung der Kontaktgabe durch Zugbelastung im Leiterkabel auszuschließen.

Nach einem weiteren Vorschlag ist die Kontaktfeder mit ihren Endschenkeln in der Fenstern der Stege der Außennabe festgelegt und der als Mittelsteg dienende Schenkel ist konvex gegen den Innenschleifring gebogen. Ein Endschenkel jeder Kontaktfeder ist durch eine Schraube mit dem betreffenden Steg verbunden, die gleichzeitig als Kabelanschlußschraube dient. Der andere Endschenkel jeder Kontaktteder liegt mit seitlichen Nasen an Stufen der Wandung der Fenster an. Mit dieser Ausbildung sind die Kontaktfedern besonders fest und verbiegungsfrei an der Außennabe gehalten.

In Weiterbildung der Erfindung ist vorgesehen, daß die Kontaktfedern Ansätze für Anschlußklemmen aufweisen. Durch diesen Anschluß des Leiterkabels an den Kontaktfedern erübrigen sich besondere Kontakteinrichtungen.

Weiter schlägt die Erfindung vor, daß die Lagerbuchse einen vom Befestigungsende ausgehenden Axialschlitz und auf dem Umfang sichelförmige Ringwände zur Bildung von Umfangsrinnen für die Innenschleifringe aufweist. Durch diese Ausbildung lassen sich unter Zusammendrücken der Lagerbuchse die Innenschleifringe in axialer Richtung aufschieben. Die Halbschalen der Lagerbuchse federn dann wieder auseinander, so daß die Innenschleifringe zwischen den sichelförmigen Ringwänden in den betreffenden Umfangsrinnen liegen und dadurch in axialer Richtung gesichert sind. Infolgedessen können sich die Innenschleifringe weder bei der Montage noch im Betrieb der kabeltrommel verschieben.

Schließlich sieht die Erfindung vor, daß die dem Befestigungsende der Lagerbuchse benachbarte Lagerfläche einen geringeren Durchmesser als die andere Lagerfläche aufweist. Durch diese Abstufung der Lagerflächen ist gewährleistet, daß Lagerflächen die Funktion der sichelförmigen Ringwände nicht beeinträchtigen. Die dem Befestiungsende benachbarte Lagerfläche wird durch die Befestigung der Lagerbuchse an der Gehäusewand auf ihrem Sollmaß gehalten.

Ein weiterer Vorschlag der Erfindung sieht vor, daß die dem Befestigungsende der Lagerbuchse benachbarte Lagerfläche einen geringeren Durchmesser als die andere Lagerfläche aufweist. Dieses ist für das Aufschieben beim Zusammenbau und für die Zentrierung wichtig.

Ferner sieht die Erfindung vor, daß die Halbschalen des Lagerbuchse einen ersten Anlagebund, dessen Umfangslinie die eines Durchgangs überragt, und einen Endbund, aufweist, dessen Breite parallel zu dem Axialschlitz der Breite des Durchgangs gleich ist und daß auf den Endbunden diametral zu dem Axialschlitz Keilansätze sitzen. Dadurch kann das Befestigungsende der Lagerbuchse in den entsprechend profilierten Durchgang der Gehäusewand eingerastet werden und wird dann formschlüssig festgehalten. Die Keilansätze führen die Halbschalen beim Eindrücken in den Durchgang der Gehäusewand.

Ferner wird vorgeschlagen, daß in den Axialschlitz des Befestigungsendes ein Sperrschieber eingesetzt ist, der in axialer Richtung verlaufende, widerhakenartig aufgestellte Rastzungen aufweist. Dieser Sperrschieber verhindert, daß die Halbschalen aus dem Rand des Durchgangs der Gehäusewand zurückweichen können. Der Sperrschieber hält somit die Anordnung zusammen.

Ferner wird vorgeschlagen, daß die Halbschalen dem Axialschlitz zugewandte Durchgänge für die Anschlußleiter aufweisen und daß der Sperrschieber gleichzeitig zur Einklemmung und Zugentlastung der Anschlußleiter dient.

Eine Ausführungsform der Erfindung wird im folgenden unter Bezugnahme auf die anliegende Zeichnung erläutert, in der darstellen :

Figur 1   einen Axialschnitt durch eine Kabeltrommel nach der Erfindung,

Figur 2   einen Schnitt nach der Linie II-II in Fig. 1,

Figur 3   eine Stirnansicht der Lagerbuchse in vergrößertem Maßstab,

Figur 4   eine Stirnansicht der Lagerbuchse mit zusammengedrückten Halbschalen,

Figur 5   einen Axialschnitt durch eine abgewandelte Ausführungsform einer Kabeltrommel,

Figur 6   einen Schnitt nach der Linie VI-VI in Fig. 5,

Figur 7   eine Teilansicht in Pfeilrichtung VII,

Figur 8   eine Stirnansicht der Verbindung zwischen Lagerbuchse und Gehäusewand und

Figur 9   eine Einzelansicht eines Sperrschiebers.

Eine Gehäusewand 1 mit einem Durchgang 30 für Anschlußleitungen nimmt eine Lagerbuchse 2 auf, auf der eine Außennabe 3 mit einem Trommelkörper 5 drehbar gelagert ist. Die Außennabe 3 nimmt auch Kontaktfedern 4 auf und ist formschlüssig mit einem Kern 6 des Trommelkörpers 5 verbunden. Außerdem umfaßt der trommelkörper 5 Trommelflansche 7 und 8. An dem Trommelflansch 8 sitzt ein axialer Umfangssteg 9, der sich an der Gehäusewand 1 abstützt und zur Aufnahme einer nichtdargestellten Rückzugsfeder dienen kann. Der Trommelflansch 8 hat auch einen zentralen Abschnitt innerhalb des Kerns 6.

Die Lagerbuchse 2 besitzt zwei kreisförmige Lagerflächen 10 und 11, die Gleitlagerflächen darstellen. Die Lagerfläche 10 hat einen geringeren Durchmesser als die Lagerfläche 11. Die Lagerfläche 11 weist einen Ringbund 12 auf, der zur einseitigen axialen Fixierung der Außennabe 3 dient.

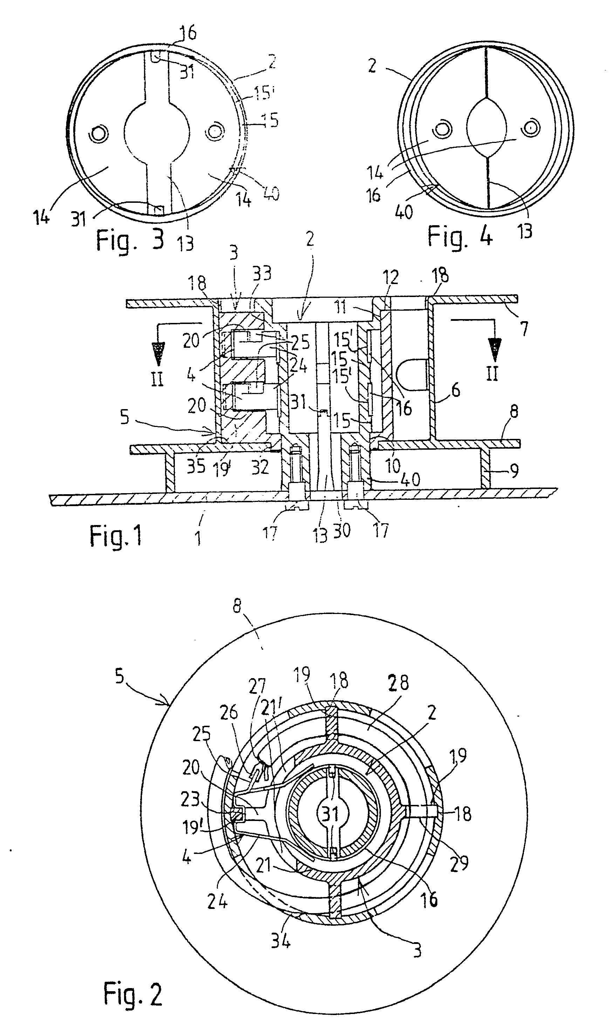

Die Lagerbuchse 2 ist ausgehend von der Stirnfläche am Befestigungsende 40 mit einem Axialschlitz 13 versehen, der die Lagerbuchse 2 im wesentlichen bis zum Ringbund 12 und insbesondere das Befestigungsende 40 in zwei Halbschalen 14 teilt. Die Halbschalen 14 weisen sichelförmige Ringwände 15 auf, die Umfangsrinnen 15' zur Aufnahme von Innenschleifringen 16 begrenzen. Jeder Innenschleifring 16 besitzt einen Lappen 31, der in den Axialschlitz 13 hineinragt und zur Verbindung mit einer Anschlußleitung bestimmt ist. Dieser Lappen 31 legt den Innenschleifring 16 jeweils in Umfangsrichtung fest. Die Fußfläche jeder Umfangsrinne 15' hat einen kreiquerschnitt. Die Umfangsrinnen 15' laufen im Bereich des Axialschlitzes 13 aus, so daß dort die Innenschleifringe 16 über die Umfangswand überstehen. Im Bereich der sichelförmigen Ringwände 15 ist der Umriß der Lagerbuchse 2 nicht mehr kreisförmig, sondern ovalförmig und zwar senkrecht zur Ebene des Axialschlitzes 13 verlängert. Fig. 3 zeigt eine entsprechende Stirnansicht der lagerbuchse 2 in entspanntem Zustand, wo der Axialschlitz 13 offen steht und die Halbschalen 14 den normalen Abstand voneinander haben. Die Innenschleifringe 16 sind jeweils in den zugehörigen Umfangsrinnen 15' fixiert, so daß sie auf den kreisförmigen Fußflächen gleichmäßig abgestützt sind und außerdem durch die sichelförmigen Ringwände in axialer Richtung fixiert sind. Die Halbschalen 14 lassen sich gemäß Fig. 4 zusammendrücken, so daß sich die sichelförmigen Ringwände 15 unter die Innenfläche der Innenschleifringe 16 zurückziehen. In diesem Zustand können die Innenschleifringe 16 in axialer Richtung aufgeschoben bzw. abgezogen werden. Dieses erlaubt eine einfache Montage der Innenschleifringe 16.

Fig. 1 zeigt die Lagerbuchse 2 in montiertem Zustand. Zwei Schrauben 17 halten die Halbschalen 14 an der Gehäusewand 1 fest. In diesem Zustand lassen sich die Halbschalen 14 nicht mehr zusammendrücken, so daß eine Verschiebung der Innenschleifringe 16 in montiertem Zustand ausgeschlossen ist. Damit ist auch die Kreisform der Lagerfläche 10 sichergestellt. Der erweiterte Zentralbereich des Axialschlitzes 13 ist auf den Durchgang 30 der Gehäusewand 1 ausgerichtet. Der Axialschlitz 13 ist auch zur Aufnahme der nichtdargestellten elektrischen Anschlußleitungen bestimmt.

Die Außennabe 3 besitzt Ringbunde 32, 33, die auf den kreisförmigen Lagerflächen 10 und 11 aufsitzen. Außerdem besitzt die Außennabe Stege 19 und 19'. Der Steg 19' weist Fenster 20 auf, die sich in Spalte 21' der Umfangswand 21 fortsetzen.

Die W-förmigen Kontaktfedern sitzen jeweils mit ihren sattelförmigen Mittelbügeln 23 unter dem Außenrand des betreffenden Fensters 20 und reichen mit ihren Schenkeln 24 durch die Spalte 21' unter die Umfangswand 21. Die Schenkel 24 liegen unter elastischer Vorspannung an den zugehörigen Innenschleifringen 16 an. Jeweils der Außenrand des Fensters 20 fixiert eine Kontaktfeder in radialer Richtung, wogegen die Ränder des Spaltes 21' die Kontaktfeder in axialer Richtung auf den Innenschleifring 16 ausrichten. Aus einem Schenkel 24 ist ein Steg 25 freigeschnitten. Dieser Steg 25 dient zur Aufnahme einer Anschlußklemme 26 eines Leiters 27. Es kann sich um eine Steckanschlußklemme, eine Schraubanschlußklemme oder eine andere Anschlußklemme handeln. Ein Leiterkabel 28, daß die Leiter 27 zusammenfaßt, ist durch in axialer Richtung gegeneinander versetzte Ausnehmungen der Stege 19 geführt und durch einen Durchbruch 34 des Kerns 6 herausgeführt. Hierdurch ist das Leiterkabel 28 auf einer wellenförmigen Bahn innerhalb der Innennabe 3 geführt, so daß eine Zugentlastung sichergestellt ist.

Die Kabeltrommel wird in folgender Weise montiert: Zunächst werden die Innenschleifringe 16 auf die Lagerbuchse 2 ausgesetzt, indem die Halbschalen 14 zusammengedrückt werden, so daß die Innenschleifringe 16 unter Ausrichtung der Lappen 31 auf den Axialschlitz 13 aufgezogen werden können, vergleiche Fig. 3 und 4. Anschließend wird die Lagerbuchse 2 in die Außennabe 3 eingeschoben, damit die Außennabe auf den Lagerflächen 10 und 11 aufsitzt und sich in axialer Richtung an dem Ringbung 12 abstützt. Sodann werden die Kontaktfedern 4 in der aus Fig. 2 ersichtlichen Weise in die Außennage eingesetzt. Die Kontaktfedern sind damit auf die Innenschleifringe 16 ausgerichtet. Verschiebungen sind nicht mehr möglich, da die Kontaktfedern sowohl in Umfangsrichtung als auch in axialer Richtung gesichert sind. Das Ende des Leiterkabels 28 wird durch den Durchbruch 34 des Kerns 6 des Trommelkörpers 5 gezogen. Die Leiter 27 werden an die Anschlußklemme 26 angeschlossen und das Leiterkabel 28 wird in Windungen durch die Ausnehmungen 29 geführt. Sodann wird der Trommelkörper 5 in axialer Richtung auf die Außennabe 3 aufgeschoben, bis der Stirnbund 35 an der Stirnfläche der Außennabe 3 anliegt. Damit ist der Trommelkörper gegen eine weitere axiale Verschiebung in Einschubrichtung gesichert. Die Lagerbuchse 2 mit dem Trommelkörper wird jetzt auf die Gehäusewand 1 aufgesetzt und mittels der Schrauben 17 befestigt. Die Schrauben 17 spannen die Halbschalen fest. Dadurch wird die Lagerbuchse 2 in axialer Richtung festgelegt, so daß alle Teile gegen Verschieben in axialer Richtung gesichert sind, da die Flansche und Bunde die Teile aneinander in Anlage halten. Durch diese Ausbildung erreicht man, daß die Teile der Kabeltrommel in einer axialen Richtung durch Flansche und Ringbunde gegeneinander gesichert sind. Hierdurch ist auch gewährleistet, daß nach dem Einsetzen der Kontaktfedern keine axiale Bewegung gegenüber den Innenschleifringen möglich ist. Infolgedessen ist eine Ausrichtung der Kontaktfedern sichergestellt. Die Kontaktfedern können in einfacher Weise in die jeweiligen Fenster der Außennabe eingesetzt werden, ohne daß zusätzliche Montagehilfsmittel oder Befestigungsmittel erforderlich wären.

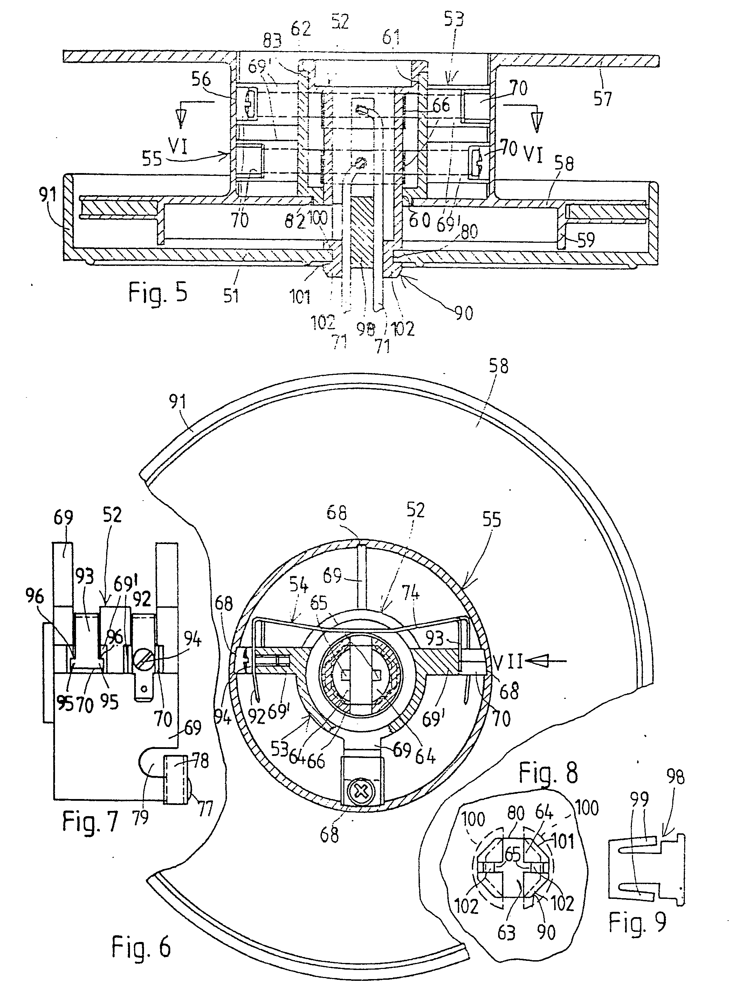

Eine weitere Ausführungsform der Erfindung ist in den Fig. 5 bis 9 dargestellt. Eine Gehäusewand 51 mit einem Durchgang 80 für Montage und Anschlußleitungen nimmt eine Lagerbuchse 52 auf, auf der eine Außennabe 53 mit einem Trommelkörper 55 drehbar gelagert ist. Die Außennabe 53 nimmt auch Kontaktfedern 54 auf und ist formschlüssig mit einem Kern 56 des Trommelkörpers 55 verbunden. Außerdem umfaßt der Trommelkörper 55 Trommelflansche 57 und 58. An dem Trommelflansch 58 sitzt ein axialer Umfangssteg 59, der sich an der Gehäusewand 51 abstützt und zur Aufnahme einer nichtdargestellten Rückzugsfeder dienen kann. Der Trommelflansch 58 hat auch einen zentralen Abschnitt innerhalb des Kerns 56. Die Gehäusewand 51 trägt einen axialen Flansch 91, der den Flansch 58 des Trommelkörpers 55 abdeckt.

Die Lagerbuchse 52 besitzt zwei kreisförmige Lagerflächen 60 und 61, die Gleitlagerflächen darstellen. Die Lagerfläche 60 hat einen geringeren Durchmesser als die Lagerfläche 61. Die Lagerfläche 61 weist einen Ringbund 62 auf, der zur einseitigen axialen Fixierung der Außennage 53 dient.

Die Lagerbuchse 52 ist ausgehend von der Stirnfläche am Befestigungsende 90 mit einem Axialschlitz 63 versehen, der zwei Halbschalen 64 abteilt. Die Halbschalen 64 weisen in der beschriebenen Weise sichelförmige Ringwände auf, die Umfangsrinnen zur Aufnahme von Innenschleifringen 66 begrenzen. In den Flächen des Axialschlitzes 63 sind Durchgänge 65 für Anschlußleiter 71 vorgesehen.

Fig. 5 zeigt die Lagerbuchse 52 in montiertem Zustand. Der Durchgang 80 hat einen achteckigen Umriß, siehe Fig. 8. Die Halbschalen 64 sind im Endbereich abgestuft, wobei ein kreissegmentförmiger Anlagebund 100 und ein segmentförmiger Endbund 101 vorhanden sind. Die Breite des Endbundes 101 parallel zu dem Axialschlitz 63 stimmt mit der Breite des Durchgangs 80 überein. Jeder Endbund 101 trägt einen Keilansatz 102, wobei die Keilanzätze diametral zu dem Axialschlitz liegen.

In den Axialschlitz 63 ist ein Schieber 98 eingesetzt, der den Axialschlitz 63 abschließt und die Halbschalen 94 auseinanderhält, damit die zwischen dem Anlagebund 100 und dem Endbund 101 gebildete Rinne den Rand des Durchgangs 80 umschließt und dadurch die Lagerbuchse festhält. Der Schieber 98 füllt mit seinem Querschnitt den axialschlitz 63 aus und weist an seinen Längsrändern in axialer Richtung angeordnete Rastzungen 99 auf, die keilförmig zueinander liegen und beim Eindrücken des Sperrschiebers in den Axialschlitz hinter der Gehäusewand 51 einrasten. Dadurch wird die Lagerbuchse klemmend an der Gehäusewand 51 festgehalten.

Die Innenschleifringe 66 sind über Lappen, durch Schweißverbindungen oder dgl. mit den elektrischen Anschlußleitern 71 verbunden. Dadurch sind die Innenschleifringe 66 in dem Axialschlitz 63 in Umfangsrichtung fixiert.

Nach Einsetzen des Schiebers 98 sind die Halbschalen 64 auseinandergedrückt, so daß die Umfangsrinnen für die Innenschleifringe 66 einen Kreisquerschnitt haben und die Innenschleifringe gleichmäßig abgestützt sind. Eine Verschiebung der Innenschleifringe in axialer Richtung ist nicht möglich. Außerdem sind die Anschlußleiter 71 verklemmt und dadurch zugenetlastet.

Die Außennabe 3 besitzt Ringbunde 32, 33, die auf den kreisförmigen Lagerflächen 60 und 61 aufsitzen. Außerdem besitzt die außennabe 53 radiale Stege 69 und 69'. Der Steg 69' weist Fenster 70 auf.

Die W-förmigen Kontaktfedern liegen mit ihrem sattelförmigen Mittelbügel oder Schenkel 74, der konvex gebogen ist, unter Vorspannung an je einem Innenschleifring 66 an. Je ein Fenster 70 für eine Kontaktfeder 54 weist an seinen Seitenwandungen Stufen 96 auf. Der zugeordnete Endschenkel 93 der Kontaktfeder besitzt seitlich angeordnete Nasen 95, die unter die Stufen 96 reichen. Der jeweils andere Endschenkel 92 greift in das diametral gegenüberliegende Fenster 70 ein und ist mittels einer Schraube 94 an dem Steg 69' befestigt. Die Schraube 94 dient gleichzeitig als Anschlußschraube für das Leiterkabel. Die Kontaktfedern 54 sind jeweils um 180° verdreht zueinander angeordnet, wie man deutlich der Fig. 6 entnimmt. Die Stege 69 und 69' sind in axialer Richtung geteilt. Es können auch selbstverständlich einheitliche Stege vorhanden sein.

Der Durchgang 79 ist durch einen schwenkbaren Zugentlastungssteg 78 abgeschlossen, der durch eine Spannschraube 77 befestigt ist. Die Funktion dieses Zugentlastungssteges ist ohne weiteres verständlich. Bei dieser Ausführungsform der Erfindung ist durch die Verrastung eine formschlüssige Verbindung gegeben, so daß zum Zusammenhalt der Kabeltrommel keine Schrauben erforderlich sind.

**Patentansprüche**

1. Kabeltrommel mit einer Lagerbuchse (2; 52), deren Befestigungsende (40; 90) an einer Gehäusewand (1; 51) gehalten ist und die Innenschleifringe (16; 66) sowie zwei Lagerflächen (10, 11; 60, 61) aufweist, mit einer Außennabe (3; 53), die auf den Lagerflächen der Lagerbuchse (2; 52) drehbar gelagert ist und mit den Innenschleifringen (16; 66) zusammenwirkende Kontaktfedern (4; 54) aufnimmt, und mit einem Trommelkörper (5; 55), der form- und krafstschlüssig auf der Außennabe (3; 53) sitzt, gekennzeichnet durch folgende Merkmale:

a) mindestens eine Lagerfläche (11; 61) weist einen beim Einstecken der Lagerbuchse (2; 52) in die Außennabe (3; 53) wirksamen Ringbund (12; 62) auf, dessen Ringfläche gegen das Befestigungsende (40; 90) gerichtet ist;

b) die Außennabe (3; 53) weist axiale Stege (19,19'; 69,69') auf, die sich in Schlitze (18; 68) des trommelkörpers (5; 55) einlegen;

c) mindestens ein Steg (19'; 69') besitzt Fenster (20; 70) jeweils zur Aufnahme je einer W-förmigen Kontakfeder (4; 54), die sich in dem Fenster abstützt und mit einem vorgespannten Schenkel (24; 74) an einem Innenschleifring (16; 66) anliegt;

d) ein Trommelfransch (8; 58) liegt an einem dem Befestigungsende (40; 90) der Lagerbuchse zugewandten Ringbund (32; 82) der Außennabe (3; 53) an;

e) die Stege (19; 69) haben mindestens eine Ausnehmung (29; 79) für die Zugentlastung eines Leiterkabels (28).

2. Kabeltrommel nach Anspruch 1, dadurch gekennzeichnet, daß die W-förmige Kontaktfeder (4) jeweils mit ihrem Mittelbügel (23) am Außenrand des Fensters (20) des Steges (19') anliegt und daß die gegeneinander vorgespannten Schenkel (24) in Spalte (21') der Umfangswand (21) der Außennabe (3) hineinreichen.

3. Kabeltrommel nach Anspruch 1, dadurch gekennzeichnet, daß die Kontaktfeder (54) mit ihren Endschenkeln (92; 93) in den Fenstern (70) der Stege (69') der Außennabe (53) festgelegt ist und daß der als Mittelsteg dienende Schenkel (74) konvex gegen den Innenschleifring (66) gebogen ist.

4. Kabeltrommel nach Anspruch 3, dadurch gekennzeichnet, daß ein Endschenkel (92) jeder Kontaktfeder durch eine Schraube (94) mit dem betreffenden Steg (69') verbunden ist, die gleichzeitig als Kabelanschlußschraube dient, daß der andere Endschenkel (93) jeder Kontaktfeder (54) mit seitlichen Nasen (95) an Stufen (96) der Wandung der Fenster (70) anliegt.

5. Kabeltrommel nach einem der Ansprüche 2 bis 4, dadurch gekennzeichnet, daß die Kontaktfedern (4) Ansätze (Stege 25) für Anschlußklemmen aufweisen.

6. Kabeltrommel nach einem der Ansprüche 1 bis 5, dadurch gekennzeichnet, daß die Lagerbuchse (2; 52) einen vom Befestigungsende (40; 90) ausgehenden Axialschlitz (13; 63) und auf dem Umfang sichelförmige Ringwände (15) zur Bildung von Umfangsrinnen (15') für die Innenschleifringe (16) aufweist.

7. Kabeltrommel nach Anspruch 6, dadurch gekennzeichnet, daß die dem Befestigungsende (40 ; 90) der lagerbuchse (2 ; 52) benachbarte Lagerfläche (10 ; 60) einen geringeren Durchmesser als die andere lagerfläche (11 ; 61) aufweist.

8. Kabeltrommel nach Anspruch 6 oder 7, dadurch gekennzeichnet, daß die Halbschalen (64) der Lagerbuchse (52) einen ersten Anlagebund (100), dessen Umfangslinie die eines Durchgangs (80) überragt, und einen Endbund (101) aufweist, dessen Breite parallel zu dem Axialschlitz (63) gleich ist der Breite des Durchgangs (80) und daß auf den Endbunden diametral zu dem Axialschlitz (63) Keilansätze (102) sitzen.

9. Kabeltrommel nach einem der Ansprüche 6 bis 8, dadurch gekennzeichnet, daß in den Axialschlitz (63) des Befestigungsendes (90) ein Sperrschieber (98) eingesetzt ist, der in axialer Richtung verlaufende, widerhakenartig aufgestellte Rastzungen (99) aufweist.

10. Kabeltrommel nach Anspruch 9, dadurch gekennzeichnet, daß die Halbschalen (64) dem Axialschlitz (63) zugewandte Durchgänge (65) für die Anschlußleiter (71) aufweisen und daß der Sperrschieber (98) gleichzeitig zur Einklemmung und Zugentlastung der Anschlußleiter dient.


**Claims**

1. A cable drum comprising a bearing bush (2 ; 52) the mounting end stud (40 ; 90) of wich is fixed in a casing wall (1 ; 51) and which bearing bush inner slip rings (16 ; 66) and two bearing surfaces (10, 11 ; 60, 61) an outer hub (3 ; 53) rotatable beared on the bearing surfaces of the bearing bush (2 ; 52) and holding contact springs (4 ; 54) cooperating with the inner slip rings (16 ; 66) and a drum barrel (5 ; 55) which is connected with the outer hub (3 ; 53) in a positive-locking and fitting manner, characterized by the following features :

a) the least one bearing surface (11 ; 61) has a ring collar (12 ; 62) the ring surface of which is directed against the mounting end stud (40 ; 90) and which is effective if the bearing bush (2 ; 52) is inserted into the outer hub (3 ; 53) ;

b) the outer hub (3 ; 53) has axial webs (19, 19' ; 69, 69') which are inserted into slots (18 ; 68) of the drum barrel (5 ; 55) ;

c) at least one web (19' ; 69') has apertures (20 ; 70) which hold a W-shaped contact spring (4 ; 54) which abuts on an inner slip ring (16 ; 66) by a pretensioned leg (24 ; 74) ;

d) a drum flange (8 ; 58) abuts against a ring collar (32 ; 82) of the outer hub (3 ; 53), said ring collar is adjacent to the mounting end stud (40 ; 90) of the bearing bush ;

e) the webs (19 ; 69) have one recess (29 ; 79) at least for the tension relief of a lead cable (28).

2. A cable drum according to claim 1, characterized in that the middle bridging part (23) of the W-shaped contact spring (4) abuts against the outer rim of the aperture (20) of the web (19') and that the legs (24) pretensioned against each other extend in gaps (21') of the circumference wall (21) of the outer hub (3).

3. A cable drum according to claim 1, characterized in that the contact spring (54) is fixed in the apertures (70) of the webs (69') by their end legs (92 ; 93) and that the middle bridging web (74) is bowed convex against the inner slip ring (66).

4. A cable drum according to claim 3, characterized in that one end leg (92) of each contact spring is fixed on the respective web (69') by a screw (94) which is used also as cable connecting screw, that the other end leg (93) of each contact spring (54) abuts by lateral noses (95) againts steps (96) of the wall of the aperture.

5. A cable drum according to one of the claims 2 to 4, characterized in that the contact springs (4) have portrusions (legs 25) for a connector block.

6. A cable drum according to one of the claims 1 to 5, characterized in that the bearing bush (2 ; 52) comprises an axial slot (13 ; 63) originating at the mounting end stud (40 ; 90) and further sickle-shaped ring walls (15) forming circumferential grooves (15') for the inner slip rings (16).

7. A cable drum according to claim 6, characterized in that the bearing surface (10 ; 60) adjacent to the mounting end stud (40 ; 90) of the bearing bush (2 ; 52) has a smaller diameter than the other bearing surface (11 ; 61).

8. A cable drum according to claim 6 or 7, characterized in that the half shells (64) of the bearing bush (52) comprise a first fitting collar (100) the circumference line of which has a greater diameter than the edge line of an aperture (80) and an end collar (101) having a width parallel to the axial slot (63) is equal to the width of the aperture (80) and that the end collar bears wedge-shaped extensions (102) oriented diametrical to the axial slop (63).

9. A cable drum according to one of the claims 6 to 8, characterized in that a locking slide (98) is inserted into the axial slot (63) of the mounting end stud (90), said locking slide (98) having in axial direction oriented barbed locking tongues (99).

10. A cable drum according to claim 9, characterized in that the half shells (64) comprise apertures (65) directed to the axial slot (63) and receiving the connecting wires (71) and that the locking slide (98) is used also for the locking and the tension relief of the connecting wires.


**Revendications**

1. Tambour pour câble comprenant une douille de support (2 ; 52), dont l'extrémité de fixation (40 ; 90) est maintenue sur une paroi de corps (1 ; 51) et qui présente des bagues glissantes internes (16 ; 66) ainsi que deux surfaces d'appui (10, 11 ; 60, 61), un moyeu externe (3 ; 53), qui est supporté sur les surfaces d'appui de la douille de support (2 ; 52) de manière à pouvoir pivoter et dans lequel sont logés des ressorts de contact (4 ; 54) coopérant avec les bagues glissantes internes (16 ; 66), et un corps de tambour (5 ; 55) qui repose à liaison de forme et de force sur le moyeu externe (3 ; 53), caractérisé par les particularités suivantes :

a) au moins une surface d'appui (11 ; 61) présente un collet annulaire (12 ; 62) qui est actif lorsque la douille de support (2 ; 52) est enfoncée dans le moyeu externe (3 ; 53) et dont la face annulaire est dirigée vers l'extrémité de fixation (40 ; 90),

b) le moyeu externe (3 ; 53) présente des nervures axiales (19, 19' ; 69, 69') qui s'insèrent dans des fentes (18 ; 68) du corps de tambour (5 ; 55),

c) au moins une nervure (19' ; 69') comporte des fenêtres (20 ; 70) chacune destinées à recevoir un ressort de contact en forme de W (4 ; 54) qui s'appuie dans la fenêtre et est en appui par une branche précontrainte (24 ; 74) sur une bague glissante interne (16 ; 66),

d) une bride de tambour (8 ; 58) est en appui sur un collet annulaire (32 ; 82) du moyeu externe (3 ; 53) qui est adjacent à l'extrémité de fixation (40 ; 90) de la douille de support ;

e) les nervures (19 ; 69) ont au moins un évidement (29 ; 79) pour la décharge de traction d'un câble (28) de conducteurs.

2. Tambour pour câble suivant la revendication 1, caractérisé en ce que le ressort de contact en forme de W (4) est respectivement en appui, par son étrier central (23), sur le bord externe de la fenêtre (20) de la nervure (19') et en ce que les branches précontraintes l'une vers l'autre (24) pénètrent dans une fente (21') de la paroi périphérique (21) du moyeu externe (3).

3. Tambour pour câble suivant la revendication. 1, caractérisé en ce que le ressort de contact (54) est, par ses branches d'extrémité (92 ; 93) fixé dans les fenêtres (70) des nervures (69') du moyeu externe (53) et en ce que la branche servant d'âme centrale (74) est repliée de manière convexe vers la bague glissante interne (66).

4. Tambour pour câble suivant la revendication 3, caractérisé en ce qu'une branche d'extrémité (92) de chaque ressort de contact est reliée par une vis (94) à la nervure concernée (69') qui sert simultanément de vis de raccordement de câble et en ce que l'autre branche d'extrémité (93) de chaque ressort de contact (54) est en appui par des saillies latérales (95) sur des gradins (96) de la paroi de la fenêtre (70).

5. Tambour pour câble suivant l'une des revendications 2 à 4, caractérisé en ce que les ressorts de contact (4) présentent des saillies (languettes 25) pour des bornes de raccordement.

6. Tambour pour câble suivant une des revendications 1 à 5, caractérisé en ce que la douille de support (2 ; 52) présente une fente axiale (13 ; 63) partant de l'extrémité de fixation (40 ; 90) et des parois annulaires en forme de croissant (15) sur son pourtour pour la formation de gorges périphériques (15') pour les bagues glissantes internes (16).

7. Tambour pour câble suivant la revendication 6, caractérisé en ce que la surface d'appui (10 ; 60), voisine de l'extrémité de fixation (40 ; 90) de la douille de support (2 ; 52) présente un diamètre plus petit que l'autre surface d'appui (11 ; 61).

8. Tambour pour câble suivant l'une des revendications 6 et 7, caractérisé en ce que les demi-coques (64) de la douille de support (52) présentent un premier collet d'appui (100), dont la ligne périphérique fait saillie au-delà de celle d'un passage (80), et un collet terminal (101) dont la largeur, parallèlement à la fente axiale (63), est égale à la largeur du passage (80) et en ce que des saillies en forme de coin (102) sont situées sur les collets d'extrémité diamétralement par rapport à la fente axiale (63).

9. Tambour pour câble suivant une des revendications 6 à 8, caractérisé en ce que, dans la fente axiale (63) de l'extrémité de fixation (90), est introduit un coulisseau d'arrêt (98) qui présente des languettes d'enclenchement (99) disposées en direction axiale et montées à la manière de contre-crochets.

10. Tambour pour câble suivant la revendication 9, caractérisé en ce que les demi-coques (64) présentent des passages (65) adjacents à la fente axiale (63) pour les conducteurs de raccordement (71) et en ce que le coulisseau d'arrêt (98) sert simultanément au pincement et à la décharge de traction des conducteurs de raccordement.

Fig. 3

Fig. 4

Fig. 1

Fig. 2

Fig. 5

Fig. 6

Fig. 7

Fig. 8

Fig. 9